# EUROPEAN PATENT APPLICATION

(11) **EP 1 724 564 A1**
(43) Date of publication of application: **22.11.2006**
(21) Application number: 05104188.7
(22) Date of filing: 18.05.2005
(51) Int. Cl.: G01N 1/31, B01L 7/00

(54) **Improved sample chamber for an analyzing device.**

(71) Applicant: Miltenyi Biotec GmbH, 51429 Bergisch Gladbach (DE)
(72) Inventor: Miltenyi, Stefan, 51429 Bergisch Gladbach (DE); Schulz, Jürgen, 21266 Jesteburg (DE); Neuschäfer, Elmar Niklas, 18055 Rostock (DE); Bosio, Andreas, 50933 Köln (DE); Drewes, Jan, 50858 Köln (DE); Wild, Stefan, 50667 Köln (DE)
(74) Representative: von Kirschbaum, Alexander

(57) **Abstract**

An analyzing device for analyzing chemical and/or biological samples comprises a sample chamber (38) formed by a base portion (12) and a head portion (26) and designed for receiving the sample. With the aid of a moving means (46,50) the sample can be moved in the sample chamber (38). The head portion (26) is connected via an intermediate element (27) with a temperature-control element (29) for equalizing the temperature of at least part of the sample. For ensuring good temperature conductivity and resistance to the sample of the head portion (26), in a preferred embodiment, the head portion (26) is made of ceramic.

## Description

The invention relates to an analyzing device and a method for analyzing chemical and/or biological samples.

With such analyzing devices tissue sections, cells, cell organelles, cell constituents, genomic or plasmid DNA, cDNA, RNA, e.g. mRNA, siRNA, microRNA as well as DNA or RNA analogs, such as PNA, LNA, proteins, in particular antibodies, peptides, polysaccharides, saccharides, metabolites as well as educts and products of chemical or physiological reactions and other molecules are analyzed. In this connection, the molecules, cell constituents, organelles, cells or tissues to be analyzed are placed either directly or indirectly via linking molecules or gel carriers onto the surface of an object carrier, normally a glass object carrier, and mounted there via covalent, coordinate or hydrogen bridge bonds to the surface. Placing of molecules can also be obtained by synthesizing on the surface, in particular of polymers, and previous mounting of one or a plurality of synthetic elements, or by mounting after synthesizing. Alternatively, molecules, cell constituents, organelles, cells or tissues can be placed onto the carrier surface and mounted there, the former interacting with the molecules, cell constituents, organelles or cells to be analyzed by covalent, coordinate, hydrogen bridge bonds, dipole-dipole-interactions or by van der Waals forces.

Detection of the molecules, cell constituents, organelles, cells or tissues to be analyzed can be effected by a reaction with a color or by bonding of a color. Detection can also be effected by chemical or enzymatic reactions, such as oxidation of silver ions e.g. by thiol groups, conversion of a substrate into a color, chemiluminescence or a polymerase chain reaction. Further, indirect detection via specifically binding molecules, such as antibodies, biotin and streptavidin, complementary DNA or RNA which, on their part, can be detected e.g. by applying the aforementioned methods, is also possible. Further, detection with the aid of physical method, such as detection of the radioactive decay of radioisotope-marked molecules, conductivity, light refraction, light absorption or changed surface properties is possible. Also, bound molecules, cell constituents, organelles, cells or tissues can be analyzed on the surface or in a condition as removed from the surface with the aid of different analyzing techniques, such as fluorescence-activated cell sorting (FACS), electrophoresis, mass spectroscopy, elementary analysis, NMR spectroscopy or IR spectroscopy.

The methods described can be applied for the purpose of detection, quantification and characterization of molecules, cell constituents, organelles or cells. For example, the presence, quantity or properties of various molecules, such as synthetic products, saccharides or polysaccharides, metabolites, active substances of medicines, peptide or protein quantities, changes to or of peptides or proteins, post-translational modifications of proteins, e.g. phosphorylation and/or dephosphorylation, methylation and/or demethylation, glycosylation and/or deglycosylation, the specificity and affinity of antibodies, genomic changes, such as loss or multiplication of alleles, chromosomes or chromosome segments, changed gene sequences or other sequences, alternative splice variants of genes, changes of gene activities, changes or modifications of cell surfaces, or the presence, quantity or type of bacteria, viruses, fungi or other pathogens as well as the correspondingly formed antibodies, can be analyzed and detected.

Such analyses of chemical and/or biological samples can serve e.g. for characterization of reactions or molecules, research of metabolic processes, regulatory mechanisms, or characterization or diagnosis of diseases and/or check of therapies.

The analyzing device described hereunder serves for improving the interaction of the mounted molecules, cell constituents, organelles, cells or tissues with the molecules, cell constituents, organelles or cells in solution, as well as the analytical reactions by optimized distribution and more uniform temperature control.

Hereunder the analysis of the gene expression with the aid of DNA microarrays is exemplified.

For this purpose, e.g. DNA pieces, i.e. gene fragments, are placed onto the surface of an object carrier. Placing of the DNA pieces is effected by dripping with the aid of a robot. Thus, the position of the individual DNA pieces on the object carrier is known. The DNA pieces combine with the surface of the object carrier and adhere thereto such that their positions do not change in the subsequent analyzing process.

In the next step, RNA is taken, for example, from a tumor to be analyzed. With the aid of enzymes, the RNA is transformed into DNA and subsequently marked with suitable markers, particularly fluorescent color markers.

Additionally, a comparative sample with healthy tissue is produced. The healthy DNA is also marked with a suitable marker. Preferably, the marker is a fluorescent marker of another color such that the healthy tissue is marked with a greenly fluorescent marker and the tissue to be analyzed taken from the tumor, for example, with a red color marker.

Subsequently, both samples are placed onto the entire object carrier. The DNA strands included in the two samples bond via hydrogen bridge bonds (base pairing) with the complementary DNA strands (hybridization) on the surface of the object carrier. Bonding of the DNA included in the samples with the DNA pieces adhering to the object carrier is effected in a hybridization process. Subsequently, the object carrier is washed such that only firmly adhering DNA pieces and hybridized DNA from the two samples are present on the object carrier.

After the object carrier has been dried, it is subjected to a detecting process. In this process, the individual positions of the object carrier to which DNA pieces adhere are analyzed using a suitable microscope. In doing so, the fluorescent markers coupled to the DNA are stimulated by laser light, for example, such that the fluorescent markers fluoresce in the corresponding color. If a certain position to which a DNA piece adheres appears as a red spot, for example, it can be concluded that this gene was active in the tumor tissue but not in the healthy tissue. If a spot fluoresces greenly, it can be concluded that this gene was only active in the healthy tissue. When a yellow fluorescence occurs, the corresponding gene was active in both tissues. With the aid of the above method, it can be diagnosed which genes are active in a tumor, for example. From this, conclusions as to the kind of tissue change and the like can be drawn.

For preventing drying and for realizing a uniform distribution of the DNA molecules, it is known to close the object carrier by a lid, for example, such that a sample chamber is formed between the object carrier and the lid. Then, the sample chamber is vibrated by a vibration means to effect a movement of the two samples. This movement helps the corresponding sample components to find the suitable counterparts with which they then combine. Providing a vibration means has the disadvantage that stationary waves are produced and thus only a limited movement of the sample occurs.

The problems described in the example above also exist in other analyses of chemical and/or biological samples in which one sample, for example, firmly adheres to a base portion at the object carrier and another sample is to react on it.

Further, from PCT/EP02/02900 an analyzing device comprising a base portion and a head portion or a lid is known. The base portion and the head portion form a sample chamber. The base portion may be a flat object carrier, for example, made of thin glass. Likewise, the object carrier or another sample carrier may be placed upon the base portion such that the sample carrier is arranged within the sample chamber. Further, this device comprises a moving means for moving the sample in the sample chamber. According to the invention, the analyzing device comprises a conveying means as a moving means. With the aid of the conveying means, at least part of the sample is drawn off the sample chamber and subsequently returned to the sample chamber. Conveying of part of the sample can be effected by moving the sample to and fro in that part of the sample is drawn off the sample chamber and returned in opposite direction to the sample chamber. For this purpose, at least one channel is preferably connected with the sample chamber, which channel is connected with a pump or another conveying means for moving the sample to and fro. Another possibility for moving the sample in the sample chamber is to circulate the sample. In this case at least part of the sample is drawn off via a discharge channel and returned to the sample chamber via a supply channel. In this case the sample is conveyed in the same direction.

By providing a conveying means as a moving means for the sample, occurrence of stationary waves is prevented. Drawing off and supplying at least part of the sample ensures that the entire sample quantity present in the sample chamber is moved. This is ensured in the case of both moving at least part of the sample to and fro and circulating at least part of the sample.

When the device described in PCT/EP02/02900 is used, an undesired cooling of the sample, in particular the conveyed part of the sample, may occur. This phenomenon occurs in particular in the analysis of chemical and/or biological samples which must have, for example, a temperature of up to 75 °C in the sample chamber. Further, it was noted that heating of the sample chamber, in particular through components made of glass, leads to a delay in the temperature control and possibly to inexact sample temperatures. This is in particular due to the poor heat conductivity of glass. Further, it was noted that it is not possible to make the base portion and/or the head portion from steel, high-grade steel, aluminum, copper or compounds/alloys therefrom, e.g. anodized aluminum, brass. Although these materials have a good heat conductivity, they are attacked by numerous samples.

It is an object of the invention to provide an analyzing device for analyzing chemical and/or biological samples, wherein the sample temperature is adjustable.

According to the invention, this object is achieved with the features of claim 1.

The analyzing device according to the invention comprises a sample chamber formed by a base portion and a head portion. For equalizing the temperature of the sample, according to the invention a temperature-control element is connected with the head portion. According to the invention, a side of the head portion defining the sample chamber is made from a material with high resistance to the sample and good temperature conductivity. This allows the sample temperature to be equalized within a narrow specified temperature range via the temperature-control element connected with the sample portion. The temperature variation preferably lies in a range of ± 1 °C. Further, provision of a sample-resistant material according to the invention ensures that, for example, the analysis results are not falsified by part of the sample being separated from or washed out of the head portion.

Preferably, the material is resistant to deionized or distilled water. Preferably, the material is resistant to aqueous solutions, preferably saline solutions up to the solubility limit, preferably haloides, carbonates, sulfates, nitrates, hydroxides, amines, amides, phosphates, hydrogen phosphates and dihydrogen phosphates, preferably of the alkali and alkaline earth metals, e.g., but not limited to, NaCl, CaCl₂, MgCl₂, NaOH, ethylenediaminetetraacetate (EDTA), tetraethylammonium chloride.

Preferably, the material is resistant to organic acids and bases as well as their salts, e.g., but not limited to, formic acid, acetic acid, citric acid, sodium citrate, ammonium acetate.

Preferably, the material is resistant to water-soluble polymers, e.g., but not limited to, sodium dextransulfate, poly(ethylene glycol), polyacrylamide.

Preferably, the material is resistant to detergents, preferably ionic detergents, e.g., but not limited to, sodium dodecylsulfate (SDS) or Tween.

Preferably, the material is resistant to organic solvents, e.g., but not limited to, chloroform, preferably polar solvents, e.g., but not limited to, dimethylformamide (DMF), formamide, dimethyl sulfoxide (DMSO), dimethylsulfide (DMS), ketones, e.g., but not limited to, acetone, alcohols, preferably methanol, ethanol, propanol, isopropanol, butanol, isobutanol, phenol, polyalcohols, preferably glycol, glycerol.

The resistance exists preferably in a temperature range from -196 °C to 500 °C, preferably from -80 °C to 200 °C, preferably from -20 °C to 150 °C, preferably from 4-100 °C.

Preferably, the resistance lasts for at least 12 hours, preferably, the resistance allows repeated use of the head portion.

Preferably, materials having a mechanical load-bearing capacity are used. Preferably, hard materials having a Vickers hardness [HV] of at least 10, preferably more than 20, preferably more than 50, preferably more than 100, preferably more than 500 are used. Preferably, the material has a yield strength_{0.2%} of at least 10 MPa, preferably more than 100 MPa, preferably more than 200 MPa, preferably more than 500 MPa, preferably more than 1000 MPa. Preferably, the material has a bending strength of at least 10 MPa, preferably at least 50 MPa, preferably at least 100 MPa, preferably at least 500 MPa, preferably at least 1000 MPa.

Preferably, the material has a good heat conductivity. Preferably, the heat conductivity exceeds 10 W/mK. Preferably, the heat conductivity exceeds 100 W/mK.

Preferably, the material, from which in particular the overall head portion is made, is selected such that it offers good dimensional accuracy. Thus it can be ensured that the volume of the sample chamber is defined and constant. Preferably, the manufacturing tolerances of the surface defining the sample chamber are smaller than 20 µm, preferably smaller than 10 µm, preferably smaller than 5 µm. Preferably, the mean linear thermal expansion coefficient in the range from 30-1000 °C a30-1000 lies in the range from 1-10*10⁻⁶/K.

Further, the material used is preferably selected such that little or no interaction occurs between the sample and the material. Preferably, the surfaces do not comprise any reactive groups which form a covalent or coordinate bond with amine groups, thiol groups or hydroxyl groups. Preferably, the surface is uncharged. Preferably, the surface does not comprise any groups which may form hydrogen bridge bonds (hydroxyl groups, amine groups or thiol groups).

Preferred materials from which at least one side of the head portion defining the sample chamber, and preferably the overall head portion are made include: heat-conductive plastic materials, preferably CoolPoly E1501 polypropylene (Cool Polymers, Inc.), graphite, diamond, ceramic, metals, preferably aluminum or copper, alloys, preferably brass. Graphite, metals or alloys are preferably used in combination with a protective layer. Preferred protective layers are silicate coatings, parylene, diamond-like carbon, Teflon, silicon carbide, silicon nitride or boron nitride.

Particularly preferred is the use of ceramic, in particular non-oxide ceramics, in particular borides, carbides, nitrides and silicides (e.g. TiC, TaC, WC, TiN, TaN, TiB₂, MoSi₂), in particular aluminum nitride, boron nitride, boron carbide, silicon nitride, silicon carbide, further hard-material mixed crystals (e.g. TiC-WC, TiC-TaC-WC, TiC-TiN) as well as double carbides and complex carbides (e.g. Co₃W₃C, Ni₃W₃C).

Preferably, the head portion is of plate-shaped configuration. The head portion preferably comprises a flat surface extending in the direction of the sample chamber. Since in a particularly preferred embodiment the base portion is also flat and arranged in parallel to the inside of the head portion, it is ensured that inside the sample chamber the sample has a uniform thickness and/or height.

In a particularly preferred embodiment, the head portion is connected via an intermediate element with the temperature-control element. The intermediate element is made from a material with good heat conductivity, in particular from metal, and in a particularly preferred variant from aluminum. In a particularly preferred embodiment, the preferably provided channels for conveying and/or circulating the sample pass through the intermediate element. Due to the good heat conductivity of the intermediate element, the intermediate element serves as a heat accumulator such that the sample temperature is also equalized in the channels arranged in the intermediate element. To prevent interaction between the sample and the material of the intermediate element, preferably flexible conduits made of a suitable material are arranged in the channel. Also, the channels of the intermediate element may coated with a sample-resistant material.

The head portion preferably comprises at least one channel through which sample liquid can be supplied to the sample chamber and/or discharged from the sample chamber. In a particularly preferred variant, the head portion comprises on the side facing the sample chamber elements and/or a mechanically molded surface, e.g. grooves, and/or a chemically molded surface, e.g. differently hydrophobic zones, which provide for a uniform overflow, intermixing, homogenization and/or distribution of the liquid in the sample chamber. Preferably, the supply and/or discharge channels comprise a transverse channel connected with the respective channel, wherein the transverse channel is preferably configured as a slot or a groove and is open over its overall length in the direction of the sample chamber. This configuration allows for better conveyance and homogenization of the sample.

Hereinafter, the invention will be explained in detail with respect to a preferred embodiment with reference to the accompanying drawings in which:

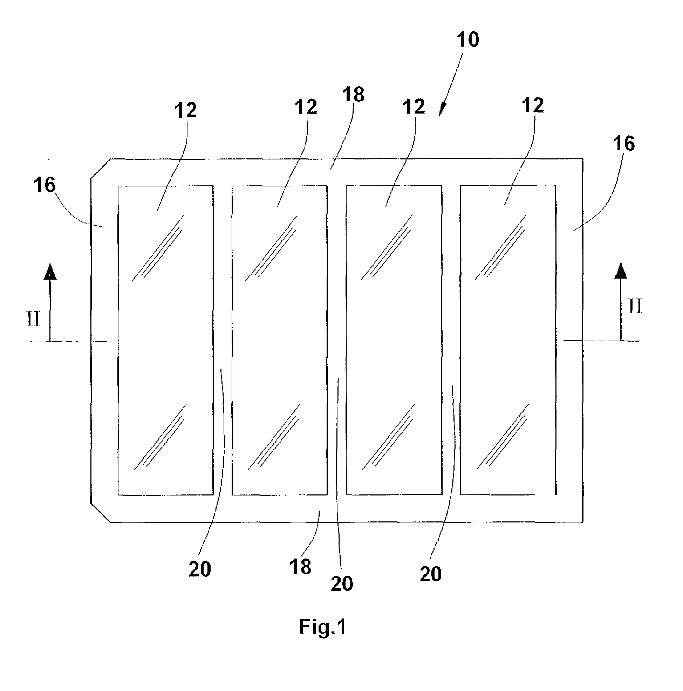

- Fig. 1: shows a schematic top view of a preferred embodiment of the receiving device with several inserted base portions,
- Fig. 2: shows a schematic sectional view of a first preferred embodiment taken along the line II-II of Fig. 1, the head portion not illustrated in Fig. 1, an intermediate element and a temperature-control element being additionally illustrated,
- Fig. 3: shows a schematic sectional view of a second preferred embodiment in principle corresponding to the embodiment shown in Fig. 1,
- Fig. 4: shows a schematic top view of a preferred embodiment of the head portion on the side facing the sample chamber,
- Fig. 5: shows a schematic sectional view taken along the line V-V of Fig. 4,
- Fig. 6: shows a schematic sectional view of a preferred embodiment of the head portion in connection with the intermediate element and the temperature-control element, and
- Fig. 7: shows a schematic sectional view along line VII-VII of Fig. 6.

A receiving device 10 for several object carriers 12 comprises a bottom portion 14. The bottom portion 14 is connected with centering elements 16,18, 20. In the illustrated embodiment, the centering elements 16,18,20 are arranged such that four rectangular receiving areas 22 are formed in each of which an object carrier 12 can be arranged. The centering elements 16,18,20 have two opposing shorter side walls 16 and two likewise opposing longer side walls 18 arranged between the side walls 16. In the illustrated embodiment, three partition walls 20 arranged in parallel to the shorter side walls 18 are provided between the side walls 18.

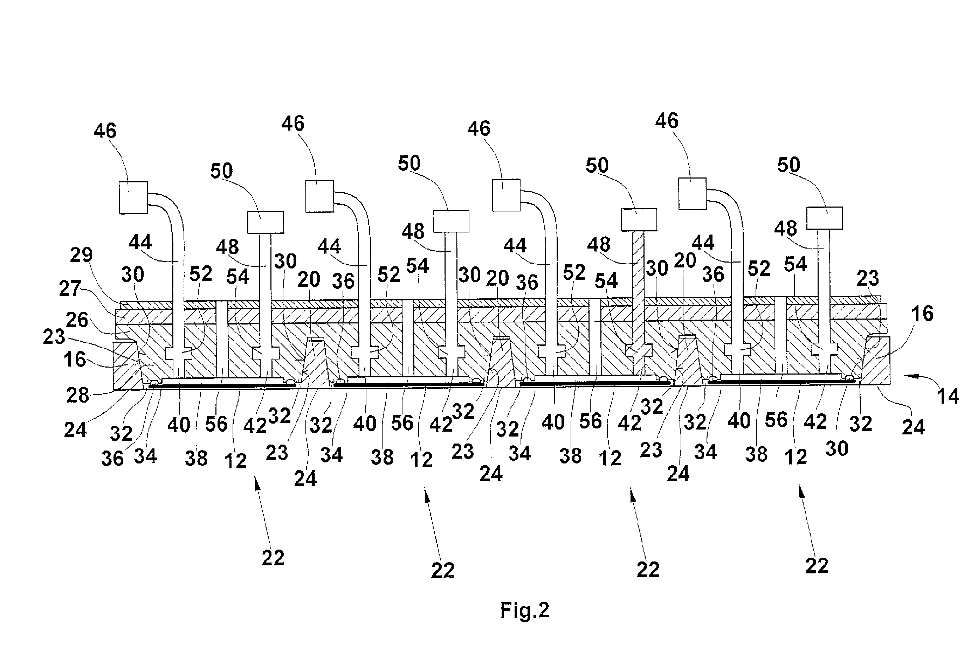

On the lower sides 24 of the centering elements 16,18,20, the bottom portion 14 configured as a diaphragm is mounted. The receiving areas 22 hence have a flexible diaphragm as a bottom on which one object carrier 12 each is supported. Thus, it is possible to press from below against the diaphragm, as shown in Fig. 2, in order to horizontally align the object carrier, for example.

On their insides 23, i.e. on the sides facing the receiving areas 22, the centering elements 16,18,20 are chamfered. Thereby, the opening pointing upwards in Fig. 2 of the individual receiving areas is upwardly enlarged. This facilitates the insertion of the object carriers 12 into the receiving areas 22.

A lid or head portion 26 according to the invention is configured such in a first embodiment (Fig. 2) that it projects into the individual receiving areas 22 formed between the centering elements 16,18,20. To this end, the lid 26 comprises four projections 28 in the illustrated embodiment, which have a substantially rectangular cross-section. The side walls 30 of the projections 28 abut on the inner walls of the web-shaped centering elements 16,20. Likewise, side walls of the projection 28 not illustrated in Fig. 2 abut on the web-shaped centering elements 18. On the underside of the lid 26 facing the base portion or sample carrier 12, for each receiving area 22 frame-shaped projections 32 are provided or formed by an additional component. The frame-shaped projection is configured as a circumferential projection. On an underside 34 of the frame-shaped projection 32, a seal 36 is provided which is also configured a circumferential seal. The seal 36 rests on an outer edge of the sample carrier 12 und seals the sample carrier towards the lid 26. Due to the frame-shaped projection 32, a sample chamber 38 is formed between an inner side of the lid 36 and the sample carrier 12 within the frame-shaped projection 32.

The head portion 26 preferably made from ceramic material is connected, on its side facing away from the sample chambers 38, with an intermediate element 27. The intermediate element 27 is made from a material with good heat conductivity, in particular from aluminum. On the upper side facing away from the head portion 26 of the intermediate element 27 a temperature-control element 29, such as a Peltier element, is arranged. Preferably, the temperature-control element 29 substantially extends over the overall surface of the intermediate element 27 such that the intermediate element 27 is uniformly heated. The intermediate element 27 transfers the heat to the head portion 26 which also has a good heat conductivity.

For moving samples provided in the sample chamber 38, two channels 40,42 connected with the sample chamber 38 are provided in the lid 26. The channel 40, for example, is connected via a flexible conduit 44 to a pump 46. Correspondingly, the channel 42 is connected via a flexible conduit 48 with a pump 50. The two pumps 46,50 are controlled by a preferably common control unit. The pumps 46,50 alternately draw part of the sample located in the sample chamber into the channel 40 and 42, respectively, and subsequently return it into the sample chamber 38. Thereby, movement of the sample in the sample chamber 38 is realized such that, for example when the device is used for analyzing DNA molecules, the probability of an interaction and thus the bonding of marked DNA strands with the surface-bound DNA strands is increased.

The flexible conduits 44,48 connected with the channels 40,42 pass through the intermediate element 27 and through the temperature-control element 29. Provision of a flexible conduit which passes through the intermediate element 27 ensures that no interaction occurs between the material of the intermediate element 27 and the sample. Further, it is ensured that the sample is also heated inside the flexible conduit, if possible. If necessary, the flexible conduits 44,48 may, in the exposed area, be surrounded and/or jacketed by an insulation and/or a heat-conductive layer connected with the temperature-control element 29.

Further, two receiving chambers 52,54 are provided within the head portion 26. The receiving chamber 52 is connected with the channel 40, and the receiving chamber 54 is connected with the channel 42. Due to the size of the receiving chambers 52,54, the sample quantity taken from the sample chamber 38 can be collected. It is also possible that the two pumps 46,50 are directly connected with the receiving chambers 52,54 and are possibly arranged within the lid 26 or on the upper side thereof.

For supplying a sample to the sample chamber 38, a further channel 56 connected with the sample chamber 38 is provided in the lid 26, which channel 56 may also pass through the intermediate element 27 and the temperature-control element 29, but preferably bypasses these elements. After the lid 26 has already been set upon the receiving device 10, samples can be supplied through this channel 56 into the sample chamber 38 which is already tightly sealed. Likewise, the sample can be supplied through one of the two channels 40,42, which is possibly branched for this purpose.

For improving the movement in the sample chamber 38, the channels 40,42 may be branched such that a plurality of channels 40,42 are connected with the sample chamber 38. Further, it is possible to provide a plurality of channels 40,42 per sample chamber 38 in the lid 26. Preferably, half of the channels are connected with the same pump.

The lid 26 and the sample carriers 12 are held in respective holding devices not shown. In Fig. 2, one and/or both holding devices can be vertically, transversely or arcuately moved. Because of the movement of one and/or both holding devices together with the lid and the sample carriers 12, respectively, an automatic fitting of the lid 26 into the receiving areas of the receiving device 10 and/or an automatic fitting of the receiving areas of the receiving device 10 relative to the lid 26 is possible.

In this case, the seal 36 provided at the frame-shaped projections 32 is pressed upon an edge portion of the sample carriers 12, and the sample chamber 38 is formed. Since the sample carriers 12 are supported on an elastic planar bottom portion 14 or a diaphragm serving as bottom portion 14, damaging the sample carriers by lowering the lid 26 is prevented. Further, the elastic support or the elastic diaphragm 14, respectively, serves for ensuring a tight sealing between the lid 26 and the sample carriers 12.

The sample chamber 38 which, in the illustrated embodiment, substantially extends over the overall sample carrier 12 may be divided into a plurality of individual sample chambers. For this purpose, webs subdividing the sample chamber 38 are arranged on the lower side of the lid 26. On the side of the webs facing the sample carrier 12 preferably seals corresponding to the seals 36 for sealing the individual sample chambers produced are provided. Each individual sample chamber produced is, as described above, preferably provided with channels 40,52,56 and has the corresponding preferred configuration. Each individual sample sub-chamber into which the sample chamber 38 is subdivided can thus be filled with hybridization liquid independent of adjacent sample chambers, and handled as described above. Due to the subdivision of the sample chamber 38 into a plurality of sample sub-chambers different samples can be analyzed in different ways using a standard object carrier 12. In particular, identical samples taken e.g. from the bodies of different patients can be analyzed using the same hybridization liquids, or identical samples taken from the body of a patient can be analyzed using different hybridization liquids. In this connection it is particularly advantageous that commercial object carriers can be used as sample carriers 12.

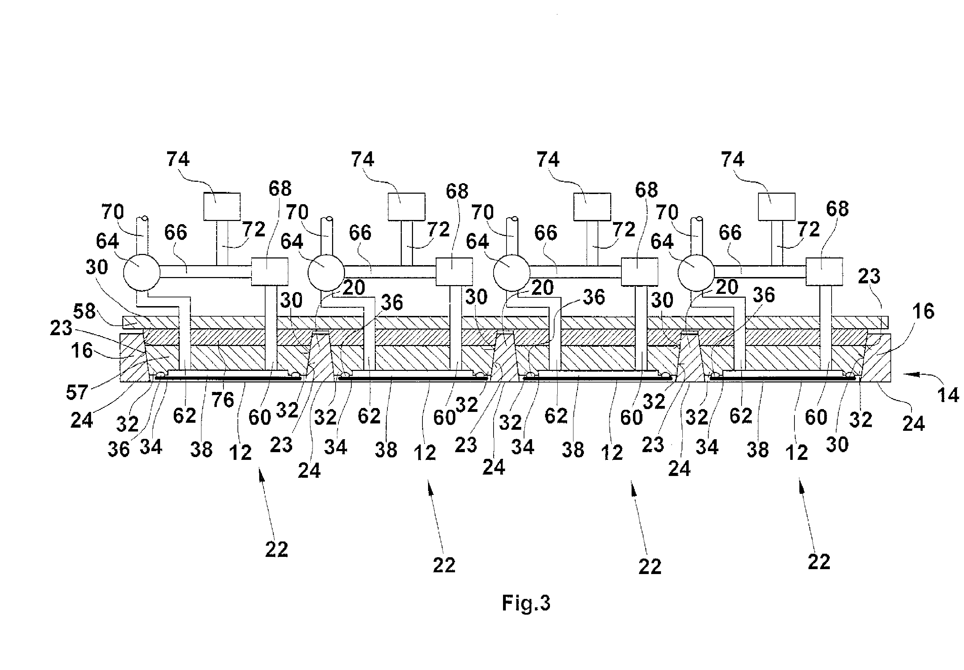

A second preferred embodiment (Fig. 3) comprises a lower area identical with that described with reference to Fig. 2. The lid or head portion 57 as well as both the intermediate element 76 and the temperature-controf element 58 are of different configuration in this embodiment. Identical or similar components of the device are designated with the same reference numerals in Fig. 3.

The head portion 57 comprises a supply channel 60 connected with the sample chamber 38 and a discharge channel 62 connected with the sample chamber 38, said channels 60,62 bypassing the intermediate element 76 and the temperature-control element 58. The channel 62 is connected via a valve 64 and a channel 66 with a pump 68. The pump 68 is connected with the supply channel 66. The valve 64 is further connected with a drain 70. The channel 66 is connected via another channel 72 with a medium reservoir 74. The arrangement of the pump 68, the valve 64, the medium reservoir 74, including the connecting channel 72, as well as the sample chamber 38 in the circuit comprising the sample chamber 38, the valve 64, the pump 68 and the channels 60, 62 and 66 may be varied according to requirement.

The position of the valve 64 can be e.g. selected such that the sample in the sample chamber 38 is circulated. The sample is thus drawn off the chamber 38 via the discharge channel 62, supplied via the channel 66 to the pump 68 and then supplied via the channel 66 back to the sample chamber 38.

The position of the valve 64 may, for example, be selected such that the sample contained in the sample chamber 38 is circulated. The sample is thus drawn off the chamber 38 via the discharge channel 62, supplied via the channel 66 to the pump 68, and then returned via the channel 66 to the sample chamber 68.

For discharging a portion of the sample via the drain 70, the valve 64 may be arranged in an intermediate position such that a portion of the sample fed via the channel 62 to the valve 64 is supplied to the channel 70, and another portion is supplied to the cannel 66.

Further, it is possible to set the valve 64 such that the channel 66 is closed and the entire sample is supplied towards the drain 70. For this purpose, new sample liquid is supplied with the aid of the pump 68 from the reservoir 74 to the sample chamber 38, and the sample contained therein is pressed out of the sample chamber 38. To allow the entire sample to be exchanged, the channel 66 must also be emptied. For this purpose, the valve 64 is switched over after evacuation of the sample from the sample chamber 38 such that the sample remaining in the channel 66 is pressed at least up to and into the channel 70. Subsequently, the valve 64 is opened again and the sample contained in the channel 66 of the sample chamber 38 and the channel 62 is pressed into the drain 70.

With the aid of the temperature-control element 58, preferably a Peltier element, the temperature of the sample contained in the sample chamber 38 can be equalized via the intermediate element 76 and the head portion 57. This is effected as described above with reference to Fig. 2.

Preferably, a separate pump 68 is provided for each of the four sample chambers 38 of the illustrated embodiment. Preferably, only one medium reservoir is provided for a plurality of, in particular for all sample chambers 38. For a separate sample exchange in the individual sample chambers 38 correspondingly controllable valves are provided in the channels.

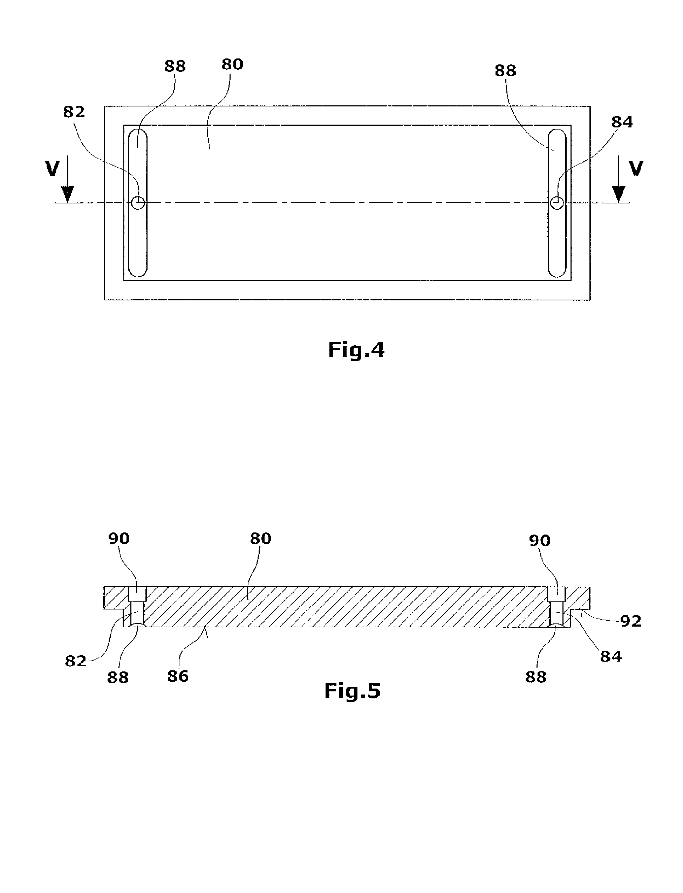

An particularly preferred embodiment of a ceramic head portion 80, which is suitable for defining a single sample chamber, is shown in Figs. 4 and 5. The head portions 26 and 57, respectively, may be configured analogously to the head portion 80.

The head portion 80 is of substantially rectangular configuration and comprises two through-going channels 82,84. The channels 82,84 have, for example, the function of the channels 40 and 42 described with reference to Fig. 2, or the function of the channels 60,62 described with reference to Fig. 3. On a side 86 of the head portion 80 facing the sample, i.e. at a side wall of the sample chamber 38, two transverse channels 88 are provided in the head portion 80, said transverse channels 88 being connected with a through-going channel 82 and 84, respectively. The transverse channels 88 are designed for a uniform flow through the sample chamber 38 and a better intermixing, homogenization and/or distribution of the sample.

On the side of the head portion 80 opposite the transverse channels the channels 82,84 have an enlarged diameter. The cylindrical expansion of the channels 82,84 serve for receiving the flexible conduits 44,48 (Fig. 2) and 66 (Fig. 3), respectively, connected with the pumps and possibly the valves. The flexible conduits arranged in these receiving openings 90 preferably bypass the intermediate element 27 and 76, respectively, as well as the temperature-control element 29 and 58, respectively.

Further, in the illustrated embodiment, the head portion 80 comprises a supporting element 92 configured as a circumferential projection. Due to the exact construction of the supporting element 92 the height of the sample chamber 38 can be defined with high accuracy. The distance between the head portion 80 and 26,57, respectively, (Fig. 2 and Fig. 3) and the object carrier 12 is set by a frame with a defined height. This frame can further be connected with the sealing element 36 shown in Fig. 2 and Fig. 3. Alternatively, the circumferential projection can be configured as a raised portion, as shown in Fig. 2 and Fig..3, which directly defines the distance between the head portion 80 and 26,57, respectively (Fig. 2 and Fig. 3), and the object carrier 12.

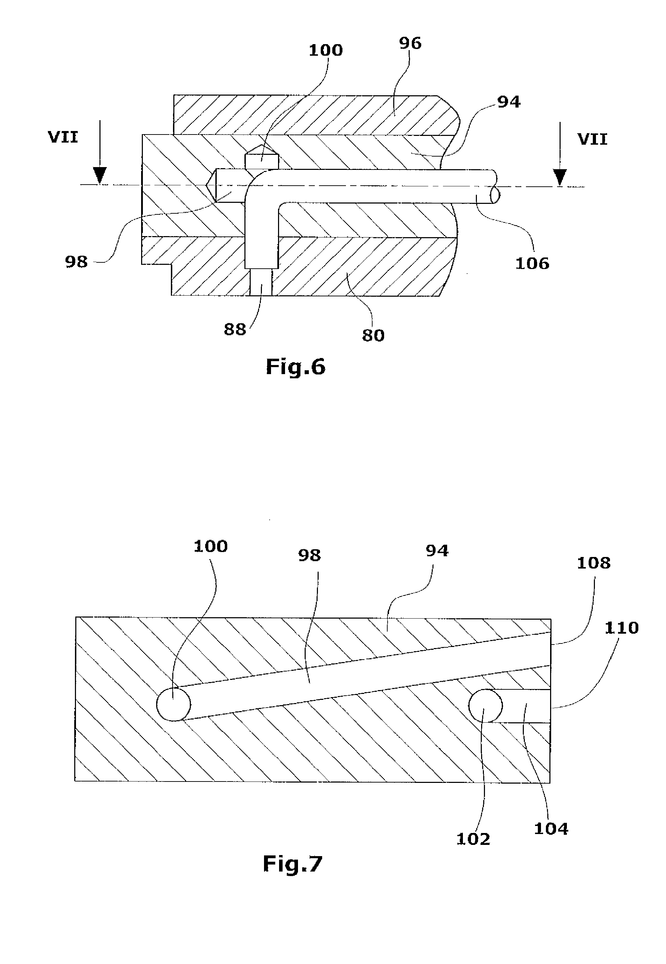

In another preferred embodiment (Figs. 6 and 7), the head portion 80 corresponds to the head portion described with reference to Figs. 4 and 5. The head portion 80 has connected thereto an intermediate element 94 preferably made of aluminum. An upper side of the intermediate element 94 facing away from the head portion 80 has connected thereto a temperature-control element 96.

In contrast to the embodiments described above, the channels and/or flexible conduits do not extend substantially vertically through the intermediate elements 76 and 27, respectively, as well as the temperature-control elements 58 and 29, respectively. Rather, in this preferred embodiment, channels and/or bores 98,100,102,104 are provided in the intermediate element 94. Here, the bores, as shown in Figs. 6 and 7, are arranged such that a flexible conduit 106 disposed inside the bores passes substantially horizontally over a long distance through the intermediate element 94. This offers the advantage that the sample contained in the flexible conduit is kept at a constant temperature by the intermediate element 94.

According to the embodiment involved (Fig. 2 or Fig. 3), the pumps and valves are arranged laterally next to the intermediate element 94 and/or connected with the lateral outlet openings 108 and 110.

## Claims

1. An analyzing device for analyzing chemical and/or biological samples, comprising
a sample chamber (38) for receiving the sample, formed by a base portion (12) and a head portion (26;57),
a moving means (46,50;68) for moving the sample in the sample chamber (38), and
a temperature-control element (29,58,96) connected with the head portion (26,57,80) for equalizing the temperature of at least part of the sample,
**characterized in that**
a side (86) of the head portion (26,57,80) defining the sample chamber (38) is made from a material which is resistant to chemicals and offers good heat conductivity.

2. The analyzing device according to claim 1, **characterized in that** the material is resistant to deionized or distilled water.

3. The analyzing device according to claim 1 or 2, **characterized in that** the material is resistant to aqueous solutions, preferably saline solutions up to the solubility limit, preferably haloides, carbonates, sulfates, nitrates, hydroxides, amines, amides, phosphates, hydrogen phosphates and dihydrogen phosphates, preferably of the alkali and alkaline earth metals, e.g., but not limited to, NaCl, CaCl₂, MgCl₂, NaOH, ethylenediaminetetraacetate (EDTA), tetraethylammonium chloride.

4. The analyzing device according to one of claims 1-3, **characterized in that** the material is resistant to organic acids and bases as well as their salts, e.g., but not limited to, formic acid, acetic acid, citric acid, sodium citrate, ammonium acetate.

5. The analyzing device according to one of claims 1-4, **characterized in that** the material is resistant to water-soluble polymers, e.g., but not limited to, sodium dextransulfate, poly(ethylene glycol), polyacrylamide.

6. The analyzing device according to one of claims 1-5, **characterized in that** the material is resistant to detergents, preferably ionic detergents, e.g., but not limited to, sodium dodecylsulfate (SDS) or Tween.

7. The analyzing device according to one of claims 1-6, **characterized in that** the material is resistant to organic solvents, e.g., but not limited to, chloroform, preferably polar solvents, e.g., but not limited to, dimethylformamide (DMF), formamide, dimethyl sulfoxide (DMSO), dimethylsulfide (DMS), ketones, e.g., but not limited to, acetone, alcohols, preferably methanol, ethanol, propanol, isopropanol, butanol, isobutanol, phenol, polyalcohols, preferably glycol, glycerol.

8. The analyzing device according to one of claims 1-7, **characterized in that** the resistance exists preferably in a temperature range from
- 196 °C to 500 °C, preferably from -80 °C to 200 °C, preferably from
- 20 °C to 150 °C, preferably from 4-100 °C.

9. The analyzing device according to one of claims 1-8, **characterized in that** the resistance lasts for at least 12 hours, such that preferably the head portion can be repeatedly used.

10. The analyzing device according to one of claims 1-9, **characterized in that** the heat conductivity is larger than 10 W/mK, preferably larger than 20 W/mK, preferably larger than 50 W/mK, preferably larger than 100 W/mK.

11. Analyzing device according to one of claims 1-10, **characterized in that** the material has a good dimensional accuracy, wherein preferably the manufacturing tolerances of the surface defining the sample chamber are smaller than 20 µm, preferably smaller than 10 µm, preferably smaller than 5 µm, and/or preferably the mean linear thermal expansion coefficient in the range from 30-1000 °C a30-1000 lies in the range from 10⁻³/K-10⁻⁹/K, preferably in the range from 10⁻⁴/K-10⁻⁸/K, preferably in the range from 10⁻⁵/K-10⁻⁷/K.

12. The analyzing device according to one of claims 1-11, **characterized in that** the material, under analysis conditions, does not form a covalent or coordinate bond with the molecules to be analyzed, wherein preferably the surfaces do not comprise any reactive groups which form a covalent or coordinate bond with amine groups, thiol groups or hydroxyl groups.

13. The analyzing device according to one of claims 1-12, **characterized in that** the material, under analysis conditions, does not form any hydrogen bridge bonds with the molecules to be analyzed.

14. The analyzing device according to one of claims 1-13, **characterized in that** the material, under analysis conditions, does not enter into electrostatic interactions with the molecules to be analyzed, wherein the surface is preferably uncharged.

15. The analyzing device according to one of claims 1-14, **characterized in that** the material has a good mechanical stability; preferably, hard materials having a Vickers hardness [HV] of at least 10, preferably more than 20, preferably more than 50, preferably more than 100, preferably more than 500 are used.

16. The analyzing device according to one of claims 1-15, **characterized in that** the material has a yield strength_{0 2%} of at least 10 MPa, preferably more than 100 MPa, preferably more than 200 MPa, preferably more than 500 MPa, preferably more than 1000 MPa.

17. The analyzing device according to one of claims 1-16, **characterized in that** the material has a bending strength of at least 10 MPa, preferably at least 50 MPa, preferably at least 100 MPa, preferably at least 500 MPa, preferably at least 1000 MPa.

18. The analyzing device according to one of claims 1-17, **characterized in that** the material is a plastic material.

19. The analyzing device according to one of claims 1-18, **characterized in that** the material is graphite, preferably in combination with a protective layer, preferably with silicate coatings, parylene, diamond-like carbon, Teflon, silicon carbide, silicon nitride or boron nitride.

20. The analyzing device according to one of claims 1-19, **characterized in that** the material is metal and/or an alloy, preferably, gold, silver, aluminum, copper or brass, preferably in combination with a protective layer comprising silicate coatings, parylene, diamond-like carbon, Teflon, silicon carbide, silicon nitride or boron nitride.

21. The analyzing device according to one of claims 1-20, **characterized in that** the material is ceramic, in particular non-oxide ceramics, in particular borides, carbides, nitrides and silicides (e.g. TiC, TaC, WC, TiN, TaN, TiB₂, MoSi₂), in particular aluminum nitride, boron nitride, boron carbide, silicon nitride, silicon carbide; further hard-material mixed crystals (e.g. TiC-WC, TiC-TaC-WC, TiC-TiN) as well as double carbides and complex carbides (e.g. Co₃W₃C, Ni₃W₃C).

22. The analyzing device according to one of claims 1-21, **characterized in that** the head portion (26,57,80) is of plate-shaped configuration.

23. The analyzing device according to one of claims 1-22, **characterized in that** the head portion (26,57,80) is connected via an intermediate element (27,76,94), which offers good heat conductivity and is in particular made from metal and in particular preferably from aluminum, with the temperature-control element (29,58,96)

24. The analyzing device according to one of claims 1-23, **characterized in that** the head portion (26,57,80) comprises at least one channel (40,42, 60,62,82,84) per sample chamber (38) for supplying and/or discharging the sample.

25. The analyzing device according to claim 24, **characterized in that** the head portion (26,57,80) comprises on the side facing the sample chamber a mechanically molded surface, e.g. grooves, and/or a chemically molded surface, e.g. differently hydrophobic zones, which provide for a uniform overflow, intermixing, homogenization and/or distribution of the liquid in the sample chamber.

26. The analyzing device according to claim 24 or 25, **characterized in that** the channel (82,84) is connected with a transverse channel (88) which preferably extends up to two opposing sample-chamber walls.

27. The analyzing device according to one of claims 24-26, **characterized in that** the channel (82,84) is connected via a flexible conduit (106) with a conveying means.

28. The analyzing device according to one of claims 24-27, **characterized in that** the flexible conduit (106) passes through recesses (98,100,102,104) provided in the intermediate element (94).

29. The analyzing device according to one of claims 1-28, **characterized in that** the base portion (12) and/or the head portion (26,57,80) comprise supporting elements (92) for defining the height of the sample chamber (38).
